# EUROPEAN PATENT APPLICATION

(11) **EP 4 388 859 A1**
(43) Date of publication of application: **26.06.2024**
(21) Application number: 22214767.0
(22) Date of filing: 19.12.2022
(51) Int. Cl.: A01F 7/06, A01F 12/18, A01F 12/22

(54) **A CROP PROCESSING ASSEMBLY FOR A COMBINE HARVESTER**

(71) Applicant: CNH Industrial Belgium N.V., 8210 Zedelgem (BE)
(72) Inventor: Duquesne, Frank R.G., 8550 Zwevegem (BE); Ricketts, Jonathan E., Coal Valley (IL), 61240 (US); Lesher, Joshua A., Hamburg (PA), 19526 (US); Kemmerer, Benjamin D., Hamburg (PA), 19256 (US); Flickinger, Wayne T., Oxford (PA), 19363 (US); Hillen, Curtis F., Lititz (PA), 17543 (US); Harmon, Zachary, East Earl (PA), 17519 (US); Dise, Reuben J., East Earl (PA), 17519 (US)
(74) Representative: CNH Industrial IP Department

(57) **Abstract**

A crop processing assembly comprises a tube-shaped cage structure and a threshing and separation rotor (7) mounted in said cage structure. The cage structure comprises one or more curved gratings (10) at the bottom and a cover (16) at the top, so that the rotation of the rotor actuates the movement of crops along a helicoidal path through the gap between the rotor and the cover and gratings. Inclined guide vanes (30) are preferably arranged on the inner surface of the cover to provide guidance to the crops. The cover comprises a step (17) between an upstream portion (16a) of the cover and a downstream portion (16b) of the cover, so that the gap between the rotor and the cover is larger in the downstream portion than in the upstream portion. The step is oriented at an oblique inclination angle (α), when the cover is regarded in a parallel projection view from a position above the step. The inclination angle is configured so that the step (17) has the function of guiding the crops along the helicoidal path. When guide vanes are present, the step itself performs the same function as the vanes, so that the mounting of one or more additional vanes in the stepped transition area is not required.

## Description

### Field of the Invention

The present invention is related to an assembly for the processing of agricultural crops harvested from a field. Such assemblies are typically applied in self-propelled combine harvesters, and comprise a threshing and separation rotor that is rotatable inside a cage structure comprising a closed cage cover at the top and gratings at the bottom. The invention is related to assemblies of this type configured to process crops while the rotation of the rotor transports the crops along the longitudinal direction of the rotor, in the space between the rotor and the cage structure.

### State of the art.

In a combine harvester equipped with the abovenamed processing assembly, the crops are cut from the field and gathered centrally by a detachable header, and further transported by a feeder located at the front of the combine, which delivers the crops to the threshing and separation rotor located in the main body of the combine and oriented in said combine's longitudinal (i.e. back to front) direction. The rotor has a cylindrical surface with threshing and separation elements mounted thereon, and is rotatably mounted in the tube-shaped cage structure. The closed cover of the cage structure surrounds the upper half of the rotor at a close distance, so that a dense mat of crops can enter the gap between the rotor and the cover. The gap is configured to ensure an effective threshing interaction between the threshing elements and the crops. At the same time, the crops are transported though said gap along a helicoidal path, actuated by the rotation of the rotor and enabled by the position of the threshing and separation elements. In addition, the cover is usually equipped with guide vanes which are inclined in accordance with said helicoidal path.

In most assemblies known today, a first portion of the rotor, called the threshing area, is dedicated to threshing the crops, i.e. removing grains from stalks and other residue, while maintaining the grains and the residue in a densely packed layer of crop material. A second portion downstream of the first is called the separation area. This area is dedicated to separating the grains from the residue, so that the grains can fall through the gratings underneath said second portion, while larger crop material remains packed around the rotor. The threshing area of the rotor comprises threshing elements shaped differently and placed usually closer together compared to the separation elements included in the separation area, so that the separation of the grains in the latter portion is facilitated.

A known way of additionally facilitating the grain separation is to apply a step in the cover of the cage structure, so that the cover is further removed from the rotor in the separation area than in the threshing area. Processing assemblies of this type are shown for example in patent publication documents US5445563 and US2009111546. The first design shows a 90° upright step, i.e. the gap between the rotor and the cover increases instantly from a lower to a higher value. When regarding the step in a top view of the cover, the step is oriented perpendicularly to the rotor's rotation axis. The latter is also the case in the second disclosure, but here the step is realized as a conical transition between the threshing area and the separation area.

In both cases, the step results in more space between the rotor and the cage cover when going from the threshing area to the separation area, thereby making it easier for the grains to be separated from the residue. The increased space also enables a significant power reduction compared to configurations wherein the rotor-cage spacing is constant along the full length of the rotor.

Nevertheless, these known processing assemblies still encounter a number of problems. One issue is related to the fact that the step represents an irregularity that is likely to hinder the progress of the crops along the helicoidal path. In addition, the integration of guide vanes in the stepped transition area is technically complex.

### Summary of the invention

The aim of the invention is to provide a solution to the above-described problems. This aim is achieved by a processing assembly and a combine harvester in accordance with the appended claims.

The present invention is related to a crop processing assembly comprising a tube-shaped cage structure and a threshing and separation rotor mounted in said cage structure. The cage structure comprises one or more curved gratings at the bottom and a cover at the top, so that the rotation of the rotor actuates the movement of crops along a helicoidal path through the gap between the rotor and the cover and gratings, from an inlet section of the cage structure, to an outlet section. Inclined guide vanes are preferably arranged on the inner surface of the cover to provide guidance to the crops and possibly influence the speed of progress if the vanes have adjustable inclination angles.

The cover comprises a step between an upstream portion of the cover and a downstream portion, so that at least in an upper area of the cover, the gap between the rotor and the cover is larger in the downstream portion than in the upstream portion. According to the invention, the step is oriented at an oblique inclination angle, when the cover is regarded in a parallel projection view from a position above the step. The inclination angle, measured with respect to a plane perpendicular to the rotor's rotation axis, is configured so that the step has the function of guiding the crops along the helicoidal path. When guide vanes are present, the step itself performs the same function as the vanes, so that the mounting of one or more additional vanes in the stepped transition area is not required. It is nevertheless possible to attach a vane to the surface of the step for further improving the guidance of the crops.

The invention realises the advantages of a step in the cover, i.e. facilitating the grain separation and reducing the power consumption, whilst ensuring effective guidance of the crops along the full trajectory, including the stepped transition area.

### Brief description of the figures

Figure 1 is a schematic view of a combine harvester equipped with a single-rotor crop processing assembly.
Figure 2 illustrates the cage structure of a crop processing assembly in accordance with an embodiment of the invention.
Figure 3 is a top parallel projection view of the cage structure's cover, illustrating the inclination angle of the inclined step.
Figure 4 is a parallel projection view of the cage structure, as seen in the direction of the rotor's rotation axis.
Figure 5a shows the inside of the cover, and the position of guide vanes mounted thereon. Figure 5b is a top view, illustrating the inclination angle of the guide vanes.
Figure 6 illustrates an embodiment wherein a guide vane is mounted on the surface of the inclined step.
Figure 7 illustrates an embodiment wherein the step itself is slanted relative to the upstream and downstream cover portions.
Figure 8 illustrates a cage structure for a twin-rotor crop processing assembly in accordance with the invention.

### Detailed description of preferred embodiments of the invention

Preferred embodiments will now be described with reference to the drawings. The detailed description is not limiting the scope of the invention, which is defined only by the appended claims.

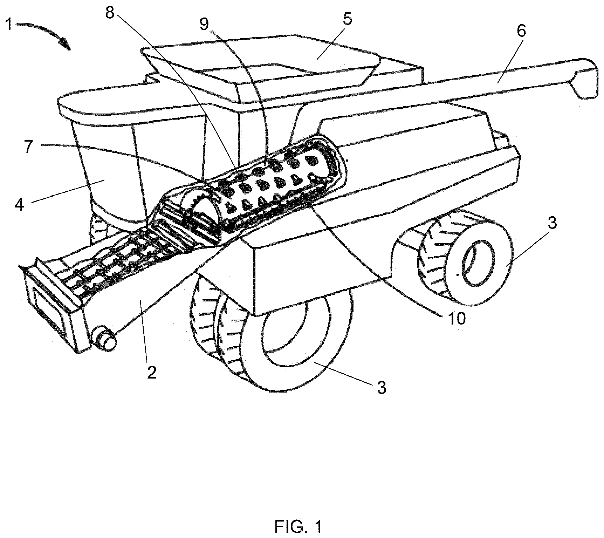

Figure 1 shows a combine harvester 1 as known in the art, comprising a feeder 2, a set of wheels 3, a driver's cabin 4, grain tank 5 and grain unloading tube 6. A header (not shown) can be removably attached to the front side of the feeder 2. The crop processing assembly is shown in a cutaway view, revealing the position of the threshing and separation rotor 7 placed in the longitudinal direction of the combine, with threshing and separation elements 8 mounted on the cylindrical rotor surface. In other combine harvesters, the rotor can also be placed tranversally with respect to the longitudinal direction of the combine. The cage cover 9 is partially cut away, but the gratings 10 underneath the rotor are visible. The represented machine is an example of a single rotor system. Twin rotor systems are equally well-known and comprise two rotors mounted mutually parallel in the longitudinal direction of the combine, and configured to rotate in opposite directions. Each rotor is surrounded by its own cage structure including a top cover preferably provided with guide vanes and a set of gratings underneath the rotor.

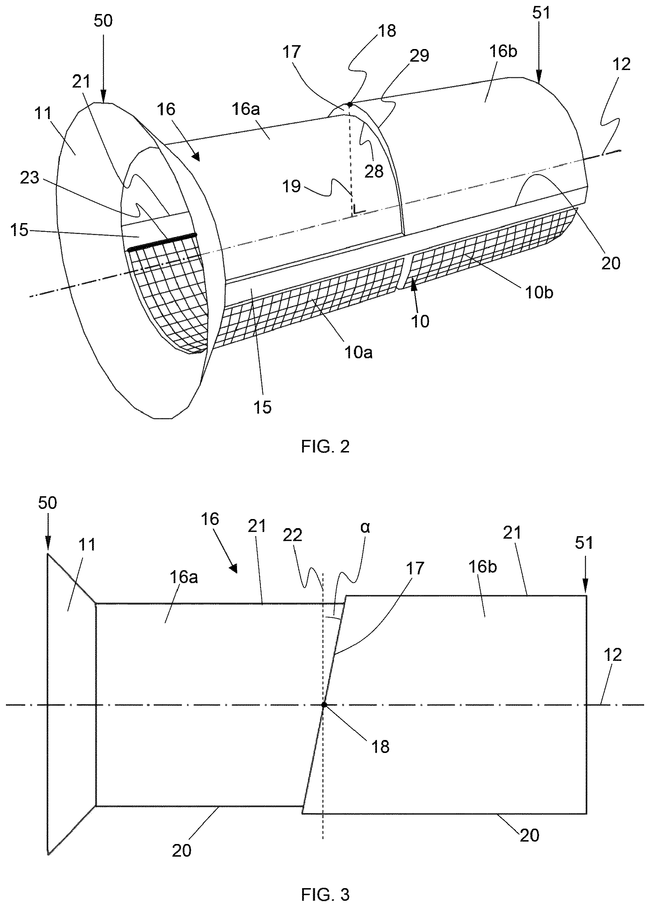

Figure 2 illustrates an image of a tube-shaped cage structure in a single-rotor crop processing assembly according to an embodiment of the invention. The image is conceptual rather than realistic and intended only to illustrate the characterizing features of the invention in a manner sufficiently clear for them to be brought into practice by a person skilled in the art. The cage structure comprises an inlet section 50 and an outlet section 51. The structure in Figure 2 is seen to comprise a conical inlet part 11. This type of inlet is known as such and the invention is not limited to processing assemblies equipped with this type of conical inlet. The term 'tube-shaped' as used in the present context therefore covers cage structures with or without a conical inlet, and further comprising an elongated tube-shaped form with upper and lower curved surfaces. As will be illustrated by particular embodiments, the curvature of these surfaces is not limited to purely circular as seen in a cross-section perpendicular to the longitudinal direction of the cage structure.

The cage structure comprises a set of gratings 10, including a first grating 10a and a second grating 10b. The threshing and separation rotor is not shown in the drawing, in which only the rotor's central rotation axis 12 is represented. As in presently known configurations, the rotor comprises a threshing area and a separation area, located respectively above the first and second gratings. The processing assembly comprises a support structure fixed to the chassis of the combine and represented schematically as comprising two beams 15 mounted on either side of the rotor. The gratings 10a and 10b are pivotably coupled to the support structure by hinges 23 (only one hinge is visible in the drawing), so that their position relative to the underside of the rotor can be regulated in accordance with crop conditions, by a suitable actuating mechanism (not shown). The rotor, the gratings, the support structure and the actuating mechanism are known as such, and can be realized according to any known design in a processing assembly according to the invention.

The cover 16 of the cage structure extends above the rotor and performs the function, as described in the introduction, of defining a gap between the rotor and the inner surface of the cover, through which gap the crops are moving along a helicoidal path from the inlet section 50 to the outlet section 51, while being threshed and separated. The cover 16 is fixed to the support beams 15.

It is seen that the cover 16 also comprises a first portion 16a and a second portion 16b, referred to hereafter and in the appended claims as an upstream portion 16a and a downstream portion 16b, and that these portions are separated by a step 17. The step 17 extends between a lower rim 28 lying on the upstream portion 16a of the cover and an upper rim 29 lying on the downstream portion 16b, so that the downstream portion 16b is higher than the upstream portion 16a. The point 18 is the central point of the upper rim 29 of the step 17, i.e. the point of the upper rim 29 lying in the centre between the side edges 20 and 21 of the cover 16. In most embodiments, this point is also the highest point of the rim 29 as seen from the position of the rotor's rotation axis 12.

Reference is further made to Figure 3, which shows the parallel projection of the cover 16, projected in the direction of the line 19 through the central point 18 of the step's upper rim 29 and perpendicular to the rotor axis 12, the cover being projected on a plane perpendicular to said line 19. In this projection view, it is seen that the step 17 is oriented at an oblique inclination angle α relative to the plane 22 through said line 19 and perpendicular to the rotation axis 12 of the rotor.

In Figure 3 and some of the other Figures, the step 17 is shown in projection as a straight line to not unnecessarily complicate the figure, but in reality the projection of the step 17 can also appear somewhat curved, being the projection of a helix. To manufacture such a cover 16 with a step 17 inclined along the helical path, the helical shape of the step can also be approximated by successive flat and/or curved parts, so that the step can be manufactured by first cutting a metal sheet and then bending it in a number of steps to obtain a shape approximating this helical shape.

The inclination angle α of the step 17 is in line with the inclination of the helicoidal path followed by the crops, meaning that the step is inclined in the same direction as the helicoidal path. Due to this orientation, the step 17 performs the function of guiding the crops in the transition area between the upstream portion 16a and the downstream portion 16b of the cover 16. The inclination angle α may have any value that enables a guidance of the crops in the transition area. Preferred values of α are situated between 5° and 45°, more preferably between 10° and 30°.

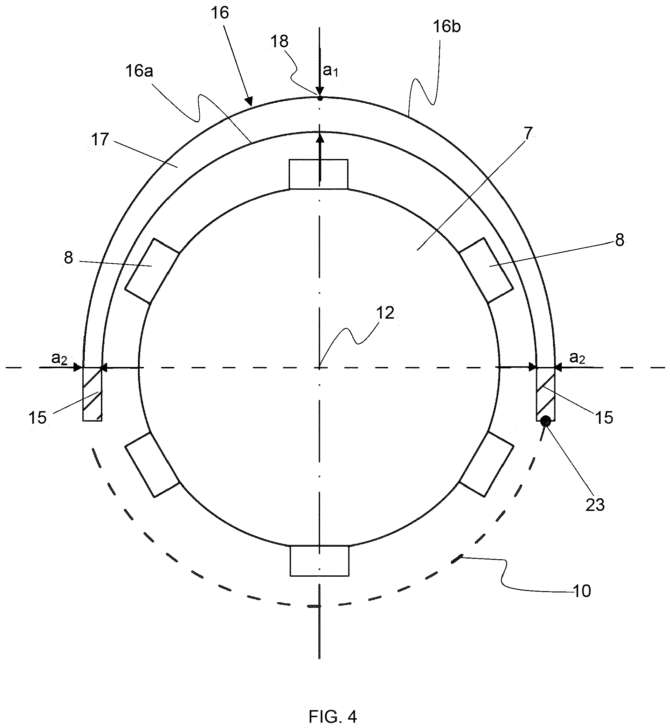

Figure 4 shows a parallel projection of the cage structure (not including the conical inlet 11) on a plane perpendicular to the rotor axis 12. The cover 16 is indicated, as well as the support beams 15 and the gratings 10 (only one is shown), the latter being adjustable by pivoting about the hinge 23. In this image, the rotor 7 is also represented, including an outline of the position of a number of threshing or separation elements 8. It is seen that in the upstream portion 16a, the cover is not purely cylindrical, but somewhat oblong in the upward direction, so that the gap between the cover and the rotor is higher at the top than at the sides of the rotor 7. As seen in the drawing, this oblong shape is maintained in the downstream portion 16b, but with an increased gap. In the embodiment shown, the gap increases across the full circumference of the cover, with the highest increase a₁ at the top, smaller increases a₂ at the edges of the cover and a gradual growth of the gap increase from a₂ at the edges to a₁ at the top. According to other embodiments, the gap increase could change from zero at the sides to a maximum at the top, or the gap increase could be constant along the full circumference of the cover 16. The invention is furthermore not limited to any particular shape of the cover's upstream and downstream sections as seen in the parallel projection view of Figure 4. The illustrated oblong shapes are preferred, but either the upstream section or the downstream section or both could be shaped as purely cylindrical surfaces.

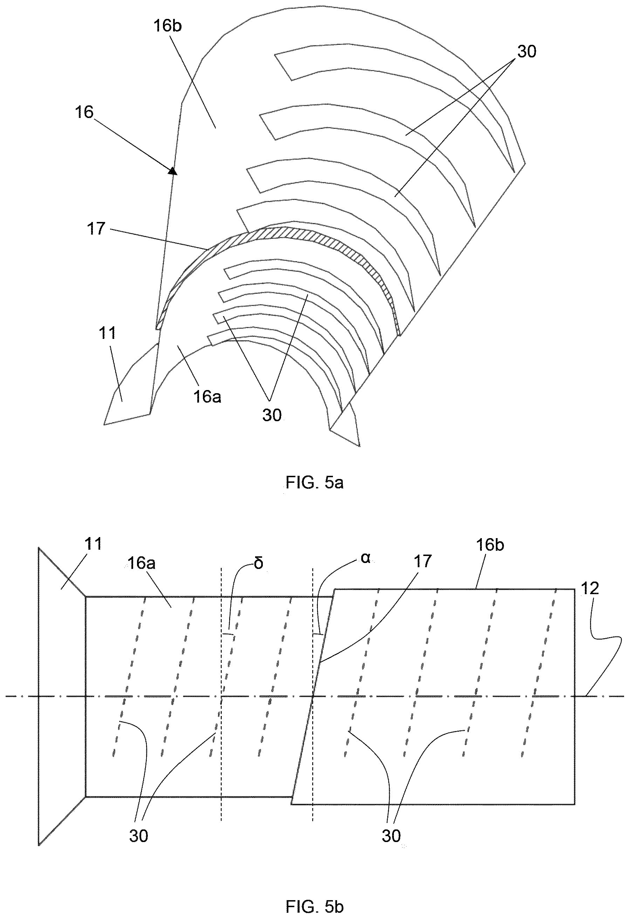

According to preferred embodiments, guide vanes are mounted on the inner surface of the cover 16. Figure 5a illustrates an embodiment of a cover 16 provided with guide vanes 30 and with the inclined step 17 in accordance with the invention. The guide vanes 30 may be realized in accordance with any known design, including the aspect illustrated in Figure 5a, that guide vanes in the downstream portion 16b of the cover are larger and placed farther apart than in the upstream portion 16a. Figure 5b is a top parallel projection view, with an indication of the position of the guide vanes 30. As seen in the drawing, the vanes 30 are mounted at an inclination angle in line with the helicoidal path of the crops. In the illustrated embodiment, the inclination angle α of the step 17 is the same as the inclination angle δ of the guide vanes 30. The step 17 thereby acts as an additional guide vane in the transition area between the upstream and downstream portions of the cover. A smooth transition is thereby realized without requiring any guide vanes in the transition area itself.

In most combine harvesters, the inclination angle of the guide vanes is adjustable, for example between 10° and 30° relative to the plane 22. Even though the inclination angle of the step 17 is not adjustable, the step will nevertheless perform a degree of guidance of the crops regardless of the position of the vanes. In the case of adjustable guide vanes, the inclination angle α of the step 17 preferably lies approximately in the middle of the inclination range of the vanes, so at about 20° when the adjustment range of the vanes is 10°-30°.

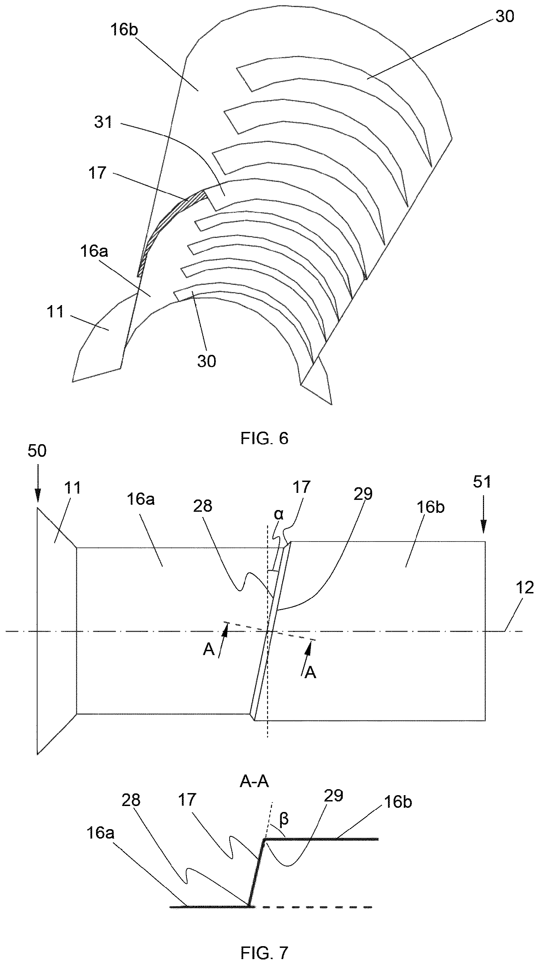

One particular embodiment is illustrated in Figure 6. An additional guide vane 31 is mounted against the upright surface of the step 17. This guide vane 31 is optional, but it does further improve the guidance of the crops in the transition area. Because it is fixed to the surface of the step 17, its installation is not technically complex.

Even though the step 17 is represented in the drawings as a 90° step, i.e. the upright surface of the step is perpendicular to the cover portions 16a and 16b, this upright surface may alternatively be slanted relative to said cover portions, as illustrated in Figure 7. More particularly, as illustrated in Figure 7, this means that the lower rim 28 of the step is closer to the inlet section 50 than the upper rim 29, so that the angle β indicated in Figure 7, between the step 17 and the surface of the downstream cover portion 16a, is smaller than 90°. According to embodiments of the invention, the angle β is at least 60°, but lower than 90°.

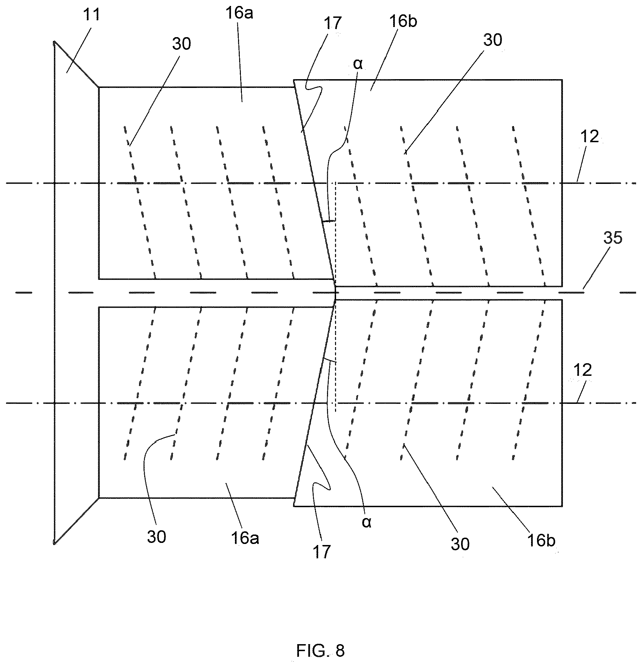

Figure 8 illustrates an embodiment of a twin rotor crop processing assembly in accordance with the invention. Both rotors (not shown) are provided with respective covers 16, which both include an inclined step 17 as described above, between an upstream cover portion 16a and a downstream cover portion 16b. As seen in the drawings, the steps are oriented symmetrically with respect to the centre line 35 between the covers. This is required because the rotors are rotating in opposite directions, so that the helicoidal paths of the crops are symmetrical with respect to said centre line 35. In another embodiment the rotors can also be rotating in the other direction with the steps

According to embodiments of the invention, more than one inclined step is provided in a cover (either in the single cover of a single rotor assembly, or in both covers of a twin rotor assembly) , wherein each step incrementally increases the gap between the rotor and the cover. The steps may be inclined at the same inclination angle α or different inclination angles may be applied.

## Claims

1. A crop processing assembly comprising :
- a tube-shaped cage structure having an inlet section (50) and an outlet section (51), and comprising a cover (16) that forms an upper portion of the cage structure and one or more gratings (10a,10b) which form a lower portion of the cage structure,
- a crop processing rotor (7) that is rotatable about a central rotation axis (12), and that is mounted inside the cage structure, the rotor having a cylindrical outer surface, with threshing and separation elements (8) mounted on said cylindrical surface, and with a gap between the outer surface of the rotor (7) and the inner surface of the cover (16),
wherein :
- the cage structure and the rotor are configured so that the rotation of the rotor actuates the transfer of crops along a helicoidal path through said gap, from the inlet section (50) to the outlet section (51),
- the cover (16) comprises a step (17) between an upstream portion (16a) of the cover and a downstream portion (16b) of the cover, the step extending between a lower rim (28) lying on the upstream portion (16a) and an upper rim (29) lying on the downstream portion (16b) of the cover, so that at least in an upper part of the cover, said gap is larger in the downstream portion (16b) than in the upstream portion (16a),
**characterized in that** :
in a parallel projection view of the cover (16), projected in the direction of a line (19) perpendicular to the rotor's rotation axis (12) and passing through the central point (18) of the upper rim (29) of the step (17), the step (17) is oriented at an oblique inclination angle (α) relative to the plane (22) through said line (19) and perpendicular to the rotor's rotation axis (12), the inclination angle and its direction of inclination being configured so that the step (17) is arranged to guide the crops passing from the upstream section (16a) of the cover to the downstream section (16b).

2. The crop processing assembly (1) according to claim 1, wherein the rotor (7) comprises an upstream threshing part provided with threshing elements and a downstream separation part provided with separation elements, and wherein the step (17) defines the boundary between said parts.

3. The crop processing assembly according to claim 1 or 2, wherein the cover (16) is provided with inclined guide vanes (30) mounted on the inner surface of the cover, and wherein the step (17) is inclined in the same direction as the guide vanes (30).

4. The crop processing assembly according to claim 3, wherein the inclination angle (δ) of the guide vanes (30) is adjustable within a range of inclination angles and wherein the inclination angle of the step (17) lies at or near the middle of said range.

5. The crop processing assembly according to claim 3 or 4, wherein one guide vane (31) is attached to the surface of the step (17).

6. The crop processing assembly according to any one of the preceding claims, wherein said oblique inclination angle (α) is between 5° and 45°.

7. The crop processing assembly according to any one of the preceding claims, wherein the height of the step (11) increases gradually from a lower value (a₂) at the edges of the cover (16) to a higher value (a₁) at the top of the cover (16).

8. The crop processing assembly according to any one of the preceding claims, wherein the lower rim (28) of the step (17) is closer to the inlet section (50) than the upper rim (29) of the step, so that the step is slanted with respect to the surfaces of the upstream and downstream portions (16a, 16b) of the cover (16).

9. The crop processing assembly according to claim 8, wherein the angle (β) between the step (17) and the downstream portion (16b) of the cover is between 60° and 90°.

10. The crop processing assembly according to any one of the preceding claims, wherein the cover (16) is provided with multiple inclined steps in accordance with the preceding claims, and wherein each step increments the gap between the rotor (7) and the cover (16).

11. A crop processing assembly according to any one of the preceding claims, comprising a pair of rotors (7) arranged mutually parallel to each other and each arranged in a tube-like cage structure in accordance with any one of the preceding claims, wherein the inclined steps (17) of both covers are arranged symmetrically with respect to a centre line (35) between the two rotors.

12. An agricultural harvester comprising a crop processing assembly according to any one of the preceding claims.
